# EUROPEAN PATENT SPECIFICATION

(11) **EP 1 171 849 B1**
(45) Date of publication and mention of the grant of the patent: **23.04.2003**
(21) Application number: 00920636.8
(22) Date of filing: 31.03.2000
(51) Int. Cl.: G07F 7/08, G07F 7/10, G07F 19/00

(54) **COMMUNICATION SYSTEM AND METHOD FOR EFFICIENTLY IMPLEMENTING ELECTRONIC TRANSACTIONS IN MOBILE COMMUNICATION NETWORKS**
KOMMUNIKATIONSSYSTEM UND VERFAHREN ZUR EFFIZIENTEN DURCHFÜHRUNG VON ELEKTRONISCHEN TRANSAKTIONEN IN MOBILEN KOMMUNIKATIONSNETZWERKEN
SYSTEME DE COMMUNICATION ET PROCEDE CORRESPONDANT DESTINE A EFFECTUER EFFICACEMENT DES TRANSACTIONS ELECTRONIQUES DANS DES RESEAUX DE COMMUNICATION MOBILE

(30) Priority: 19.04.1999 EP 99107726
(43) Date of publication of application: 16.01.2002
(73) Proprietor: Telefonaktiebolaget L M Ericsson (Publ), 126 25 Stockholm (SE)
(72) Inventor: WRONA, Konrad, D-52074 Aachen (DE); ZAVAGLI, Guido, 1-4-14 Koraku,Bunkyo-ku /Tokyo 112-0004 (JP)
(74) Representative: Mohsler, Gabriele
(86) International application number: EP0002843
(87) International publication number: WO00063854

(56) References cited:
- WO-A-96/32700
- WO-A-96/33476
- WO-A-97/45814
- WO-A-98/26386
- WO-A-98/37524
- WO-A-98/42173

## Description

The invention relates to a communication system, a method and devices for efficiently implementing electronic transactions between a mobile subscriber in a mobile communication network and a network facility by exploiting credit card based payment protocols.

WO 98 37524 A1 discloses a system and a method for performing a transaction between a customer communicating with a further terminal and a financial server, which communicates with the further terminal via a mobile communication network, for example via GSM. The further terminal exchanges information with the customers' SIM-card via a wireless link. In order to perform a secure electronic transaction always the customer identification stored in the SIM card, the terminal identification stored in the further terminal and transaction specific data are required to prepare a voucher, which is transmitted to the financial server. In order to have information transfer via the mobile communication network a SIM-Server is used. A data transmission between the SIM-card and the SIM-Server allows for example to load e-money into the SIM-card. The solution of this document allows performing of payment transaction involving a further terminal. An electronic transaction, like payment, directly between a mobile station and a network facility in an open network is not disclosed. The requirements of storage reduction on the user side are not discussed.

WO 96 33476 A discloses an electronic-monetary system (EMS) having banks that are coupled to a money generator device, correspondent banks that accept and distribute the electronic money, transaction devices used by subscribers, teller devices, a clearing bank, a data communication network for providing communications services to all components of the system and a security arrangement for maintaining the integrity and the security of the system. Thus this document discloses a large EMS, which further enhances the security and reliability of the payment transactions within the payment system. The enhancement includes for example introducing of a two-tier security server structure with a primary and ordinary security serves. The primary security servers certifies the ordinary security server. The ordinary security server certify all other modules (transaction devices , teller device, money generator device). In this way a security hierarchy is introduced with an additional step of certification. This solution does not disclose the performing of an electronic transaction, like payment directly between a mobile station and a network facility in an open network. Further the problem of a low storage capacity on the user side does not even arise in this document, because the scenario of using a mobile network with the small end user equipment for performing an electronic transaction is not foreseen.

The possibility to electronically purchase goods, for example, is part of the various commercial services being available to an internet user. Companies offer their products in the network in the form of electronic catalogues, from which a user can choose, order and acquire goods from a range of products by clicking the mouse. The buying and selling of goods, services and information in the internet has been summarized under the name of the so-called electronic commerce. A request thereby made to the underlying network guarantees a secured implementation of electronic money transactions. The safety is thereby absolutely essential due to the fact that the handling of a payment transaction is done electronically.

For this purpose a plurality of protocols has been developed, which can be used for the realization of electronic payment procedures, such as Cyber-Cash, First Virtual and Secure Electronic Transaction (SET). It is characteristic for the protocols that these have been developed for a credit card based payment by complying with the safety requirements in connection with this form of payment correspondingly. In the following, the Secure Electronic Transaction SET™, SET™ specification version 1.0, of 5/31/97 is used as an example to explain the invention.

The protocols for implementing an electronic payment procedure particularly by means of a credit card were developed for a fixed network having sufficient transmission capabilities and sufficient storing capacities in the terminals. Said requirements are met, for example, by a network architecture, in which an internet user having a personal computer is connected with the internet via a fixed line. Said requirements are, however, not met, if a user carries out an electronic transaction from a mobile communication network. A mobile communication network is characterized by a low transmission capacity and terminals having a small storing capacity. The terminals used in the mobile network are either mobile phones or devices incorporating an integrated function of a mobile phone as well as the function of a computer, the so-called PDA (Portable Digital Assistant). The size of said devices is kept to a minimum due to the mobility of the user. This merely requires the reduction of the storage capacity and results in that these devices do not have sufficient storage capacity in order to install, for example, the complex Secure Electronic Transaction (SET) protocol. In ServerWallet of Netlife, which is published under http://www.netlife.de/, a solution has been proposed, whereby the entire Secure Electronic Transaction (SET) protocol is shifted to a server specifically installed for this purpose. According to said publication the server is localized between a user and a merchant. The disadvantage of said solution is, however, that a user has no control concerning the safety aspects. The initiation of a transaction is initiated by a user and is transmitted to the server. Said server comprises the total software of the payment protocol including all pertinent data, also the personal data of the user, by means of which the initiated transaction is completely implemented by the server. This particularly means that the control and handling of the electronic transaction to be implemented is completely left to the server.

In accordance therewith it is the object of the invention to provide a method and a device allowing for an efficient implementation of secured payment transactions in a network. It is particularly the object of the invention to reduce the storage space requirement on the user side.

According to the invention this object is provided by the teaching of patent claim 1, by the teaching of patent claim 19 and by the teaching of patent claims 24 and 26.

It has thereby shown to be advantageous that by shifting part of the software to the server, fewer transactions are implemented via the air interface thereby improving the efficiency of the entire payment procedure via a mobile network. For this reason it is an advantage that the resources of the air interface are exploited in a more profitable manner.

Another advantage is seen in a minimum exploitation of the storage capacity available in terminals. This is obtained by storing only the private data of a user in a terminal.

It also an advantage that the invention is based on the standardized software. For this reason the compatibility with the available software is guaranteed, and a transparency of the implementation of a transaction is obtained for the merchant, i.e. the merchant cannot see whether a mobile user is concerned, or a user who is directly connected to a fixed network.

Additional advantageous developments of the invention result from claims 2 to 19,20 to 23 and patent claim 25.

The invention is hereinafter explained by means of embodiments and figures, whereby
- Fig. 1: shows a schematic illustration of the invention,
- Fig. 2: shows an illustration of an asymmetric code,
- Fig. 3: shows an scheme of an authentication,
- Fig. 4: shows an scheme of a dual signature,
- Fig. 5: shows a network architecture with the logic representation of the used protocols,
- Fig. 6: shows an information stream during a payment procedure.

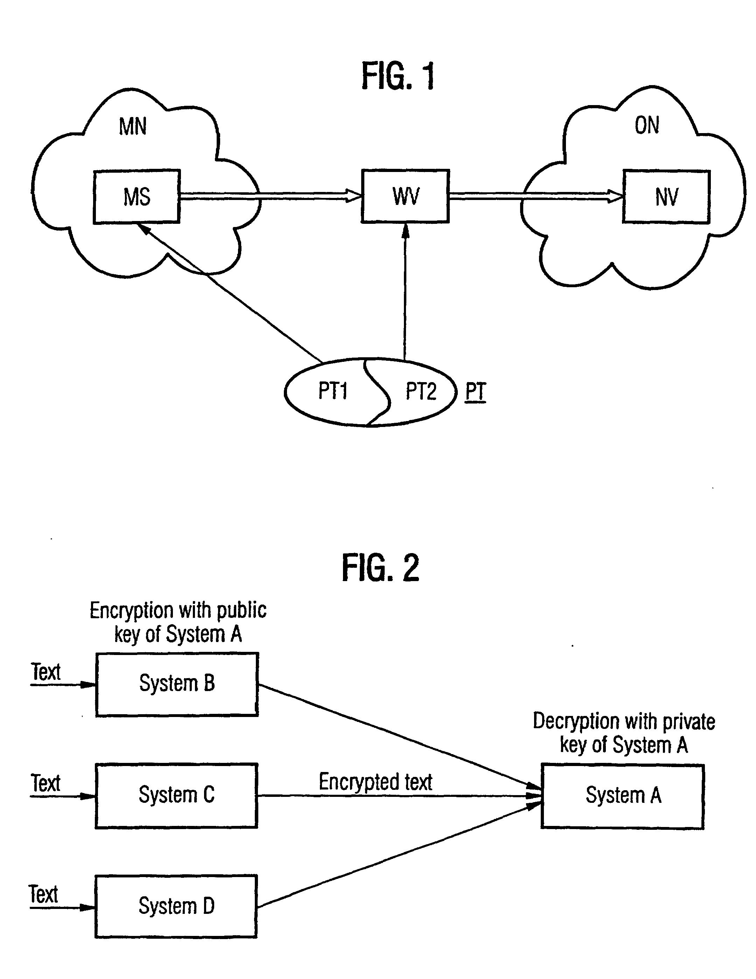

The invention is hereinafter explained by means of patent claim 1 and figure 1.

According to the invention a protocol PT for the implementation of secured electronic transactions is split between a mobile station MS in a mobile communication network MN and an additional device WV being localized between the mobile station MS and a network facility in an open network ON. The splitting of the functionality of the protocol PT is effected in a first part PT1 and in an additional part PT2. The protocol PT realizes the implementation of an electronic transaction between the mobile station MS and the network facility NV via the additional device WV.

When splitting the protocol for implementing secured electronic transactions attention is paid that the mobile device receives the private data of the users and that the administration of the generally accessible data, such as the public key or the certificates, are taken over by another device. Thus, the implementation of the total transaction is controlled by the user, for the transaction is initiated by the user of the mobile station, which implements the signature process due to the available personal data, and the control of the results of the handled transaction is left to the mobile station. The handling of the remaining processes with the network facility relating to orders and payment instructions is controlled by the additional device. In this connection the additional device meets the complex security aspects, such as forming the dual signature.

In the following, the invention is explained in more detail by means of the Secure Electronic Transaction protocol SET™.

The Secure Electronic Transaction (SET) protocol is a complex protocol guaranteeing a secured payment via credit cards in an open network, such as the internet, by using distinct cryptographic techniques. During payment, signaling messages are exchanged in the network. Said messages are transmitted in an encrypted manner. The purpose of encryption is to protect the contents of the message to be transmitted against unauthorized access in order to thereby guarantee the confidentiality of the transaction. The transmitter encrypts the data with a secret information, the so-called key, and the receiver decrypts the data by using another key. In this respect it is not necessary that both keys are identical, which varies in response to the used cryptographic process. The so-called asymmetric coding process, for instance, uses two types of keys. This method provides a public key being generally accessible, and a private key being known exclusively to one communication instance. One key is used for encryption, and the other one is used for decrypting. With respect thereto it is important that the two keys must relate to each other, such that a message encrypted with a key can only be decrypted again with the other key. In general, the method of asymmetric encryption provides that the public key is used by a transmitter for encrypting a message to a receiver. The decryption is done by using the private key of the receiver.

This fact is explained in more detail by means of figure 2. Said figure shows three systems, system B, System C, system D, which plan to transmit a text to system A in an encrypted manner. According to figure 2, the public key of system A is used for encrypting the text. The public key of one unit is generally known and accessible by each system. The encrypted text is transmitted to system A. System A has the private key of A by means of which the received text is decrypted.

In addition to the asymmetric encryption there is the symmetric encryption process. In this method both communicating facilities have the same key with the result that a message is encrypted by a transmitter with the same key as is used for decrypting it by the receiver.

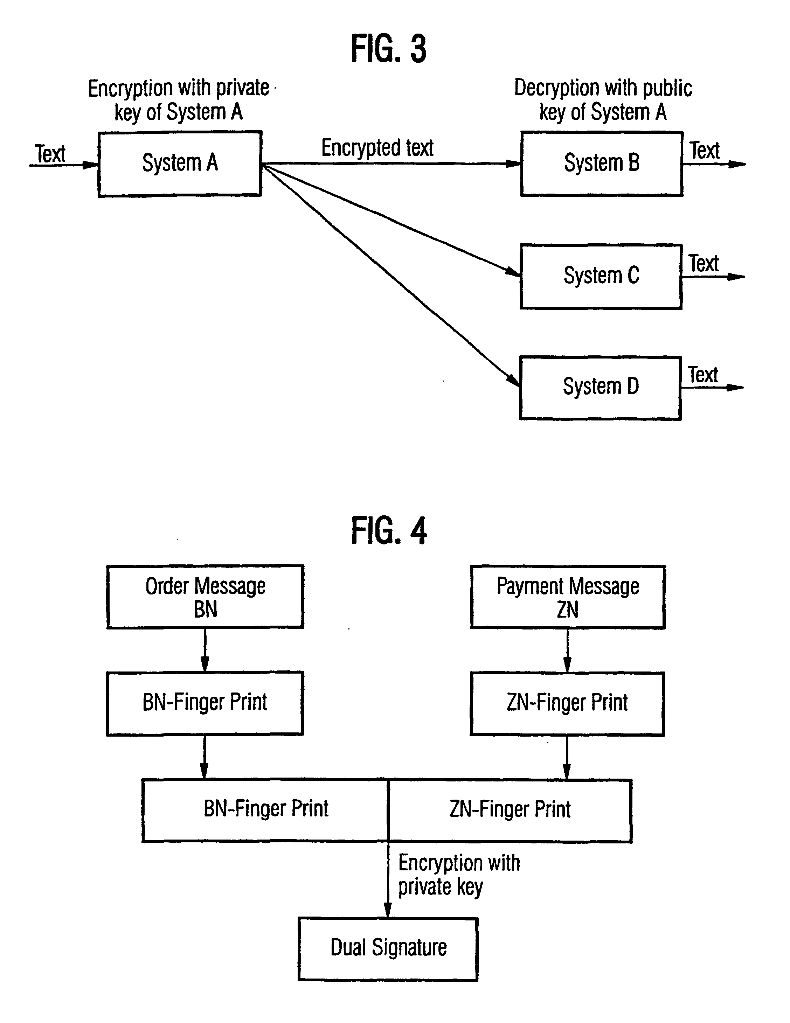

Apart from encryption messages to be implemented, an authentication of the communicating facilities is simultaneously implemented. The authentication guarantees that only persons can have access to certain data, who are authorized. In this context is it necessary to verify the identity of the communicating facilities. A number of different authentication methods can thereby be used. The best known method meeting particularly fully developed security requirements is known by the name of strong authentication. The strong authentication works according to the principle of the asymmetric encryption method. In contrast to the encryption, the authentication provides that the public key is used for decrypting a message encrypted with a private key. This fact can be inferred from figure 3. According to figure 3, the transmitter, system A, encrypts a text with his private key, which in figure 3 is called the private key of system A, and transmits it to systems B, C and D. Said systems decrypt the received message with the public key of system A.

By means of this method each facility is capable of decrypting the message, as the public key of the transmitter used for decrypting is generally known. Thus, it is obtained that a subscriber is able to authenticate himself towards each system. The systems request the authentication to be successful, as the message could only be encrypted by means of the private key on the transmitter side, which leaves to assume that this side only has knowledge of the private key.

The method of "strong authentication" is used with digital signatures. The digital signature is used for determining the authenticity of electronically transmitted messages and constitutes the electronic equivalence to the hand-written signature. By checking digital signature it can be established whether the pertinent message has been altered. A digital signature has the property that it can be produced correctly by only one single person, but that it can be verified by all receivers of the message. The asymmetric encryption methods are suited for this purpose. However, due to the long processing times not the entire document is encrypted, but a so-called cryptographic finger print also called "hash" is computed from the document, which is attached to the document in an encrypted manner. The encrypted cryptographic finger print corresponds to the digital signature. The receiver makes sure that the message received really comes from the transmitter by producing a control finger print from the received document and by comparing the same with the finger print of the transmitter decrypted with a public key.

Due to the required security, Secure Electronic Transaction (SET) uses an expanded form of digital signature, the so-called dual or double signature. The dual signature allows two split messages to be connected by a common signature such that they cannot be decrypted when being connected. The scheme of the dual signature is illustrated in figure 4. Two cryptographic finger prints, BN finger print and ZN finger print, are formed from the order message BN and payment messages ZN, and are concatenated to each other. A new finger print is formed from the concatenation and is encrypted with the private key of the transmitter. Thus, the dual signature is formed from order message BN and payment message ZN.

When forming the finger prints, a different value is used for each finger print. Said values are agreed upon with the corresponding receivers of a message during the initiating phase of the communication, such that a receiver can only decrypt that part of the message which is exclusively meant for him. Even though said receiver has access to the finger print of the other message, he cannot decrypt the actual contents of this message without knowing the pertinent value which was used for forming the finger print. Thus, the facilities involved in a communication become certain that the transmitted messages relate to each other without actually having access to the information contained in a message. The Secure Electronic Transaction (SET) allows, for example, that a merchant cannot obtain any information concerning the payment, for instance the credit card number, and that the bank vice versa does not receive any information on the order made. By means of this method, however, both facilities gain certainty that the procedures to be implemented relate to each other.

The problem resulting from cryptographic methods is due to the splitting of the keys to the communication partners. An underlying system has to guarantee that a public key is transmitted to a communication partner, which key is guaranteed to be associated with the other communication partner. This is obtained, for instance, by using so-called certificates. A central facility, the so-called certification site, has the information concerning the true identity of a person and its public key. Upon request said site transmits the public key to the communication partner. The transmission of the key is done in an encrypted form. The certification site encrypts the public key of a subscriber with the own private key. The receiver decrypts said message by using the public key of the certification site.

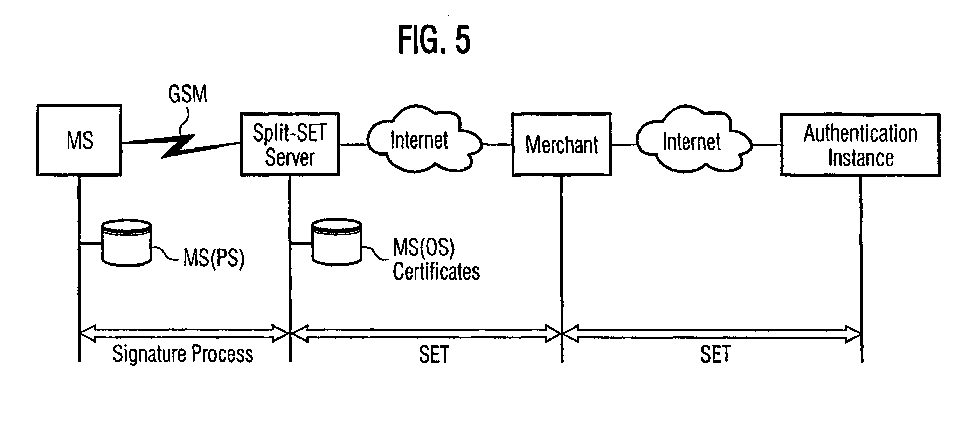

The invention is hereinafter explained in more detail by means of figure 5, which schematically shows the implementation of a transaction between a mobile subscriber, for example, between a mobile station MS and a merchant's bank integrated in the internet. The identity check of a user for the banks is in some countries carried out by a central institution, hereinafter called authentication instance. In Germany, for example, the task of the authentication instance is carried out by the Gesellschaft für Zahlungssysteme (GZS) (company for payment systems). In certain countries, however, the tasks of an authentication instance are carried out by a bank.

The upper part of figure 5 shows the physical connection with the corresponding communication units, and the lower part shows the logical connection with the involved protocols. The mobile station MS can, for instance, be a laptop computer having a card reading device. The laptop is connected with a mobile phone via a Terminal Adaptation Function (TAF), the task of which is fulfilled, for example, by the PCMCIA card (Personal Computer Memory Card International Association). The mobile station MS communicates with a so-called Split-SET server. This additional terminal is introduced for realizing the invention. The localization of the Split-SET server either takes place in the GSM (Global System for Mobile Communication) or in an external network node, the so-called ESN (External Service Node). The introduction of the Split-SET server allows the splitting of the SET™ software between said unit and the mobile station MS. The administration of the software, particularly the keys, is obtained by means of the available storage devices. According to figure 5 the localization of the private keys of the user, designated by MS(PS) in figure 5, is effected in mobile station MS. The administration of the remaining keys, for instance, the public key, designated by MS(OS) in figure 5, or the certificates takes place in the storage device of the Split-SET server. The communication of the Split-SET server with a merchant is implemented through the Internet. The merchant offers his products or services via a WWW server. The WWW pages supply information or precise descriptions, respectively, on the range of products to be offered. Each user calling said page receives the same information, also in view of cash-free money transactions. All possible alternatives of the object of the payment are thereby considered. An object of a payment can either represent a certain money value, for instance, anonymous or digital cash, or it can contain information concerning the customer's bank account, such as the power to collect money.

From the merchant the connection goes on via the internet to the merchant's bank. The bank of the merchant handles all money transactions for the merchant, such as the settlement between the merchant and the customer's bank. For the sake of control, not all facilities involved in a connection via the GSM and the internet have been shown in figure 5 in detail. Figure 5 includes the authentication instance checking the user on behalf of the merchant's bank.

The lower part of figure 5 logically shows the use of different protocols between the respective communication units. The introduction of the Split-SET server allows the splitting of the SET™ software between said unit and the mobile station, wherein the private keys are maintained in the mobile station. The public key and the certificates are shifted to the Split-SET server thereby obtaining that the signature process is controlled by the mobile station MS, whereas the realization of the remaining processes, such as the initialization of the payment, is subject to the control by the Split-SET server. The communication between the Split-SET server and the merchant as well as between the merchant and his bank is entirely based on the already existing SET™ protocol. For safety reasons it is important that not all existing keys are available to each unit integrated in a payment system. On one hand, this is guaranteed by splitting the user keys between its mobile station and the Split-SET Server, on the other hand, additional mechanisms are used during the handling of the procedures in connection with the SET™ protocol. In the case of payments according to SET™, for example, also encrypted credit card information are transmitted to the merchant when an order takes place, which, however, are not meant to be read by the merchant, but are to be transmitted by him to an authentication instance upon reviewing them. In order to guarantee the merchant despite the transparent payment instruction that said instruction relates to the effected order process, and in order to protect the customer against misuse at the same time, SET™ uses here the dual signature, whereby it is obtained that the order and the payment instruction can clearly be associated with each other without enabling the merchant to look into the payment instructions or the authentication instance to look into the order.

In the following, the invention is explained in more detail by means of patent claim 19.

According to patent claim 19 an electronic transaction between a mobile station and a network facility in an open network is realized by using a protocol for implementing secured electronic transactions. An electronic transaction involves a mobile station, a network facility and an additional device being localized between the two units. The implementation of the transaction between the mobile station and the network facility takes place by using a protocol for implementing secured electronic transactions, by splitting said protocol into a first and a second part. The first part of the protocol is allocated to the mobile station and serves the control of the implementation of the electronic transaction between the mobile station and the additional device. An electronic transaction is initiated by the mobile station, and the result of an implemented step contributing to the realization of a complete transaction, is re-supplied to the mobile station where it is evaluated. Thus, the mobile station takes over the control over the progress of the initiated transaction. The mobile station also takes over the administration of private data of the user, by means of which a signature process is carried out. Thus, control over a transaction to be implemented is obtained.

The second part of the software is implemented in the additional device. By means of this step the additional device takes over control over the implementation of the transaction initiated in the mobile station between said unit and the network facility. The additional device has the public data of a user, i.e. the remaining data being required to implement a transaction, which are not contained in the mobile station, however. Upon receipt of an initializing message from the mobile station, the additional device takes over the completion of the electronic transaction by transmitting the necessary signaling messages to the corresponding units, thereby obtaining the control over the electronic transactions.

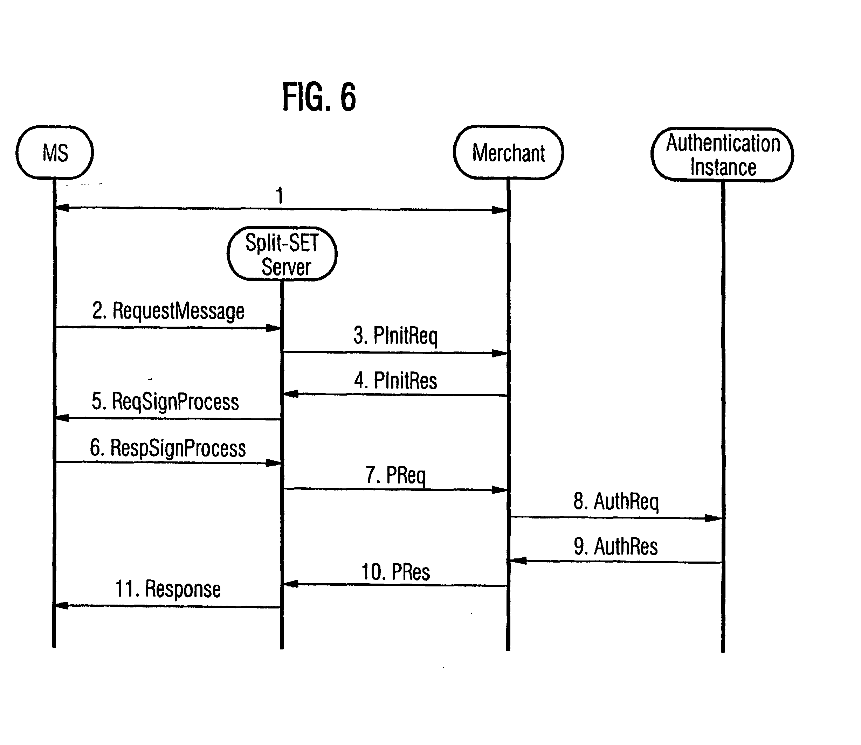

The exact progress including the required exchange of messages is hereinafter explained by means of an embodiment and figure 6. For this purpose the process of the payment transaction is used, as the acquisition of goods requires a number of transactions. The most important and simultaneously the most critical one, however, is the payment transaction.

Figure 6 schematically shows a communication between a mobile subscriber, a merchant, and an authentication instance. The progress in terms of time is characterized by the increasing sequence of the numbers of the required steps.

Step 1 schematically shows the example of the phase when the shopping is carried out. Upon the termination of this phase the mobile station transmits a message, in figure 6 being designated by Request Message, to the Split-SET server in order to imply the initialization of the transactions, step 2. To the Split-SET server the receipt of this message means that the initialization message can be transmitted to the merchant, step 3, which is responded to by the merchant with a signed message PInitRes, step 4. Said response contains the signature certificate of the merchant. In the next phase, the payment instruction is implemented. This requires the authentication of the user towards the payment system by means of a dual signature. As was already mentioned above, said signature is produced by using the private key of the user. For this reason, the Split-SET server transmits the message ReqSignProcess to the mobile station in step 5. The mobile station signs the received message with its own private key and re-sends it to the Split-SET server in form of message RespSignProcess, step 6.

The Split-SET server infers from this message the signature of the mobile station, on the basis of which it forms the so-called PReq (Purchase Request) message which is transmitted to the payment system Said message contains-the order information sent to the merchant and the payment information supplied by the merchant to the authentication instance in a transparent manner. The order information being used in said phase corresponds with the finger print of the already effected order. The complete description of the effected order, for example, the number of ordered products or the shapes thereof, is generated during the order phase, and upon completion of the ordering phase a finger print is produced from the complete description, which is used as order information during the payment phase.

The order and the payment information are transmitted to the relevant institutions in the system in an encrypted manner. The encryption of said messages is done by using the dual signature. For this purpose, two finger prints are produced from the order and the payment information, which are consequently concatenated to each other for again producing a finger print from said message, which is coded to form a dual signature by using the private keys of the mobile station.

The payment instruction is encrypted by using the symmetric coding. For this reason, the Split-SET server generates a symmetric key by means of a random sequence generator. The payment instruction is encrypted by means of said key. On a separate basis, for instance, during a registration, the credit card information and the generated symmetric key are encrypted by using the public key of the authentication instance, which was sent with the message PInitRes. In this way it is guaranteed that the credit card information are transmitted from the merchant to the authentication instance in a transparent manner without giving him the opportunity to have access to the information.
The encrypted order information, payment information, credit card information and in addition the dual signature are transmitted to the merchant in the PReq message, step 7. The merchant verifies the customer and the pertinent order from the received information.

For this purpose, the merchant uses the dual signature. At first, the own finger print is produced from the order information. Upon using the public key, the merchant infers from the received dual signature the finger print of the payment information. In a next step the merchant concatenates the two finger prints and compares them with the concatenation of said two finger prints decrypted from the dual signature. By means of this process the merchant gains the certainty that the received message really stems from the customer and that the already effected order and payment procedure to be implemented correspond with each other. The credit card information are transmitted by the merchant to the authentication instance in a transparent manner. In the next step, the merchant initiates an authorization of the payment towards the authentication instance. This operation firstly verifies the solvency of the credit owner, and in case of solvency the authorization for debiting is granted. In accordance with figure 6 this is done in step 8 by transmitting the authentication message AuthReq. Said message contains both the merchant's request concerning the acceptance of the customer's payment instruction as well as the encrypted payment instruction from the customer. The merchant's request is equally encrypted by using a symmetric process. Upon using an asymmetric coding process, the symmetric key is transmitted to the authentication instance. The request includes, among others, the finger print of the order. The merchant detects the finger print from the complete description of the order and transmits it together with the dual signature of the customer and the payment instruction to the authentication instance. The authentication instance decrypts the payment instruction by means of the private key. In order to implement the verification of the correspondence of the merchant and the customer concerning the effected order, a finger print is formed from the payment instruction, which is consequently concatenated to the finger print received from the order instruction, in order to form a dual signature from this concatenation and to compare it with the received dual signature. Thus, it is guaranteed that the description of the customer's order and the merchant correspond.

After the successfully implemented verification of the order, the authentication of the payment instruction from the customer is implemented in a next step. For this purpose, the credit card related information are inferred from the payment instruction of the customer, whereupon an inquiry is made with the customer's bank by means of the underlying banking network. The results of the authorization are packaged into a message AuthRes, encrypted and transmitted to the merchant, step 9. Said data are encrypted with a symmetric key by the authentication instance, which is transmitted to the merchant after having been encrypted with an asymmetric key, i.e. with the public key of the merchant. The merchant uses his private key for decrypting the symmetric key in order to decrypt the received message AuthRes.

Upon their verification said data are transmitted to the Split-SET server in an encrypted manner in step 10. The Split-SET server also implements the necessary verifying operations, and in a step 11 said data are transmitted to the mobile station by means of the message Response.

According to patent claims 24 and 26 the invention is realized by using a device in a mobile station. Said device (not shown) includes means for storing the first part of the protocol, which is used for administering private data of a subscriber in the mobile station. An initiation of an electronic transaction is implemented in the mobile station with means for initiating an electronic transaction in a mobile station. The transmission of a message generated in a mobile station is done by using means for transmitting data. The initiated electronic transactions are controlled with means for controlling an electronic transaction between the mobile station and the additional device. The means for receiving data in the mobile station serve the receipt of messages containing the result of the implemented electronic transaction.

An electronic transaction is implemented by the mobile station to a device being positioned between a mobile station and a network facility. Said device comprises means for storing the additional part of the protocol and means for administering a subscriber's data which are accessible to the public. The transmission of data takes place to both the mobile station and the network facility and is obtained by using means for transmitting data. The results of an implemented transaction are supplied to the mobile station, and the messages in connection with the implementation of an order and payment process are supplied to the network facility. Said facility is responsible for controlling a process in which the network facility is involved. This is obtained with means for controlling the electronic transaction between the device and the network facility. The receipt of a message from the network facility takes place by using means for receiving data.

## Claims

1. Communication system for implementing electronic transactions between a mobile station (MS) in a mobile communication network (MN) and a network facility (NV) in an open network (ON), comprising an additional device (WV) between the mobile station and the network facility, and a protocol (PT) for implementing secured electronic transactions being split into a first part (PT1) for controlling private data of a subscriber and into an additional part (PT2), wherein the first part (PT1) is implemented in the mobile station (MS) and the additional part (PT2) in the additional device (WV), and wherein an electronic transaction is implemented from the mobile station via the additional device to the network facility.

2. Communication system according to claim 1, wherein the mobile station (MS) is given the administration of a private key of a mobile subscriber.

3. Communication system according to claim 1 or 2, wherein the additional device (WV) takes over the administration of certificates and of public keys.

4. Communication system according to one of claims 1 to 3, wherein the implementation of a signature process of the mobile subscriber is effected in the mobile station.

5. Communication system according to one of claims 1 to 4, wherein the additional device (WV) controls the entire process of the electronic transactions.

6. Communication system according to one of claims 1, 3 or 5, wherein the additional device (WV) is installed either in a mobile network or in an external network node.

7. Communication system according to one of claims 1, 2 or 4, wherein the mobile station comprises a function of a personal computer and a function of a mobile phone providing for a communication with a mobile communication network.

8. Communication system according to one of claims 1 to 7, wherein electronic transactions are realized by exchanging signaling information.

9. Communication system according to one of claims 1 to 8, wherein an order and a payment instruction form part of the electronic transactions.

10. Communication system according to one of claims 8 to 9, wherein the signaling information is transmitted in an encrypted manner.

11. Communication system according to claim 10, wherein an asymmetric and symmetric encryption method is used for encrypting and decrypting the signaling information.

12. Communication system according to claim 11, wherein keys used in an encryption method are either identical or related to each other such that a message encrypted with one key is decrypted again with the other key.

13. Communication system according to claims 10 to 12, wherein the key is either a symmetric key or a private and a public key.

14. Communication system according to one of claims 4 to 13, wherein the signature process is effected with the implementation of an authentication based on an asymmetric encryption method.

15. Communication system according to one of claims 4 to 14, wherein a message is transmitted from the additional device to the mobile station during the signature process, the mobile station signing the received message with the own private key and transmitting it to the server for informing the server about the signature of the mobile station.

16. Communication system according to one of claims 1 to 15, wherein the electronic transactions are realized by using electronic transaction protocols.

17. Communication system according to claim 16, wherein the transaction protocols are Cyber-Cash, First Virtual or Secure Electronic Transaction™ (SET™).

18. Communication system according to claim 1, wherein the mobile network is a Global System for Mobile Communication (GSM), a General Packet Radio Service (GPRS), a Universal Mobile Telecommunication System (UMTS) network.

19. Method of implementing electronic transactions between a mobile station (MS) in a mobile communication network (MN) and a network facility (NV) in an open network (ON), and an additional device (WV) between the mobile station and the network facility, and a protocol (PT) for implementing secured electronic transactions, wherein said protocol is split into a first part (PT1) for controlling private data of a subscriber and into an additional part (PT2), wherein a transaction from the mobile station (MS) to an additional device (WV) is controlled by the first part (PT1) and wherein the transaction to the network facility (NV) in the open network (ON) is controlled by the second part (PT2), which is included in the additional device (WV).

20. Method according to claim 19, wherein the private data are a private key of a subscriber.

21. Method according to claim 19, wherein the second part of the software comprises public data of the subscriber.

22. Method according to claim 21, wherein the public data are a public key of the subscriber and at least one certificate.

23. Method according to one of claims 19 to 22, wherein a signature process is initiated by the mobile device by transmitting an initializing signaling message (Request_Message) and the termination of the initiating phase is supplied to the mobile device with a signaling message (RequestSignProcess) carrying the result, and wherein upon the successful implementation of the signature process a payment process of the additional device is initiated by transmitting a message (ResponseSignProcess) and the result of the implemented payment process is supplied to the mobile device by means of a message (Response).

24. Device in a mobile station for implementing a method according to claim 19, comprising
- means for storing the first part for the administration of private data of a subscriber in the mobile station,
- means for transmitting data,
- means for initiating an electronic transaction in a mobile station,
- means for controlling an electronic transaction between the mobile station and the additional device, and
- means for receiving data.

25. Device according to claim 24, comprising means for implementing a signature process.

26. Device between a mobile station and a network facility for implementing a method according to claim 19, comprising
- means for storing an additional part,
- means for transmitting data,
- means for the administration of data of a subscriber accessible by the public,
- means for controlling the electronic transaction between the device and the network facility, and
- means for receiving data.

## Patentansprüche

1. Kommunikationssystem zur Durchführung von elektronischen Transaktionen zwischen einer mobilen Station (MS) in einem mobilen Kommunikationsnetzwerk (MN) und einer Netzwerkeinrichtung (NV) in einem offenen Netzwerk (ON), mit einer zusätzliche Einrichtung (WV) zwischen der mobilen Station und der Netzwerkeinrichtung und mit einem Protokoll (PT) zur Durchführung von sicheren elektronischen Transaktionen, das in einen ersten Teil (PT1) zur Kontrolle privater Daten eines Teilnehmers und in einen zusätzlichen Teil (PT2) aufgeteilt ist, wobei der erste Teil (PT1) in der mobilen Station (MS) und der zusätzliche Teil (PT2) in; der zusätzlichen Einrichtung (WV) implementiert ist und bei dem eine elektronische Transaktion von der mobilen Station über die zusätzliche Einrichtung zu der Netzwerkeinrichtung ausgeführt wird.

2. Kommunikationssystem nach Anspruch 1, wobei der mobilen Station (MS) die Verwaltung eines privaten Schlüssels eines mobilen Teilnehmers gegeben wird.

3. Kommunikationssystem nach Anspruch 1 oder 2, wobei die zusätzliche Einrichtung (WV) die Verwaltung von Zertifikaten und von öffentlichen Schlüsseln übernimmt.

4. Kommunikationssystem nach einem der Ansprüche 1 bis 3, wobei die Durchführung eines Signaturvorgangs des mobilen Teilnehmers in der mobilen Station ausgeführt wird.

5. Kommunikationssystem nach einem der Ansprüche 1 bis 4, wobei die zusätzliche Einrichtung (WV) den gesamten Vorgang der elektronischen Transaktionen regelt.

6. Kommunikationssystem nach einem der Ansprüche 1, 3 oder 5, wobei die zusätzliche Einrichtung (WV) entweder in einem mobilen Netzwerk oder in einem externen Netzwerkknoten installiert ist.

7. Kommunikationssystem nach einem der Ansprüche 1, 2 oder 4, wobei die mobile Station eine Funktion eines Personalcomputers und eine Funktion eines Mobiltelefons umfasst, die eine Kommunikation mit einem mobilen Kommunikationsnetzwerk bereitstellen.

8. Kommunikationssystem nach einem der Ansprüche 1 bis 7, wobei elektronische Transaktionen durch Austauschen von Signalisierungsinformationen realisiert werden.

9. Kommunikationssystem nach einem der Ansprüche 1 bis 8, wobei eine Bestellung und eine Zahlungsanweisung Teil der elektronischen Transaktionen bilden.

10. Kommunikationssystem nach einem der Ansprüche 8 bis 9, wobei die Signalisierungsinformationen in einer verschlüsselten Weise übertragen wird.

11. Kommunikationssystem nach Anspruch 10, wobei ein asymmetrisches und symmetrisches Verschlüsselungsverfahren zum Verschlüsseln und Entschlüsseln der Signalisierungsinformationen verwendet wird.

12. Kommunikationssystem nach Anspruch 11, wobei Schlüssel, die in einem Verschlüsselungsverfahren verwendet werden, entweder identisch oder verwandt miteinander sind, so dass eine Nachricht, die mit einem Schlüssel verschlüsselt wird, wieder mit dem anderen Schlüssel entschlüsselt wird.

13. Kommunikationssystem nach Anspruch 10 bis 12, wobei der Schlüssel entweder ein symmetrischer Schlüssel oder ein privater und ein öffentlicher Schlüssel ist.

14. Kommunikationssystem nach einem der Ansprüche 4 bis 13, wobei der Signaturvorgang mit der Durchführung einer Authentisierung ausgeführt wird, die auf einem asymmetrischen Verschlüsselungsverfahren basiert.

15. Kommunikationssystem nach einem der Ansprüche 4 bis 14, wobei während des Signaturvorgangs eine Nachricht von der zusätzlichen Einrichtung an die mobile Station gesendet wird, die mobile Station die erhaltene Nachricht mit dem eigenen privaten Schlüssel signiert und sie an den Server sendet, um den Server von der Signatur der mobilen Station zu informieren.

16. Kommunikationssystem nach einem der Ansprüche 1 bis 15, wobei die elektronischen Transaktionen mittels elektronischer Transaktionsprotokolle ausgeführt werden.

17. Kommunikationssystem nach Anspruch 16, wobei die Transaktionsprotokolle Cyber-Cash, First Virtual oder Secure Electronic Transaction™ (SET™) sind.

18. Kommunikationssystem nach Anspruch 1, wobei das mobile Netzwerk ein Global System for Mobile Communication (GSM), ein General Packet Radio Service (GPRS), Universal Mobile Telecommunication System (UMTS) Netzwerk ist.

19. Verfahren zur Durchführung von elektronischen Transaktionen zwischen einer mobilen Station (MS) in einem mobilen Kommunikationsnetzwerk (MN) und einer Netzwerkeinrichtung (NV) in einem offenen Netzwerk (ON) und einer zusätzlichen Einrichtung (WV) zwischen der mobilen Station und der Netzwerkeinrichtung und mit einem Protokoll (PT) zur Durchführung von sicheren elektronischen Transaktionen, wobei das Protokoll in einen ersten Teil (PT1) zur Kontrolle privater Daten eines Teilnehmers und in einen zusätzlichen Teil (PT2) unterteilt ist, bei dem eine Transaktion von der mobilen Station zu der zusätzlichen Einrichtung (WV) durch den ersten Teil (PT1) geregelt wird und bei dem die Transaktion zu der Netzwerkeinrichtung (NV) in dem offenen Netzwerk (ON) durch den zweiten Teil (PT2) geregelt wird, das in der zusätzlichen Einrichtung (WV) enthalten ist.

20. Verfahren nach Anspruch 19, wobei die privaten Daten ein privater Schlüssel eines Teilnehmers ist.

21. Verfahren nach Anspruch 19, wobei der zweite Teil der Software öffentliche Daten des Teilnehmers umfasst.

22. Verfahren nach Anspruch 21, wobei die öffentlichen Daten ein öffentlicher Schlüssel des Teilnehmers und wenigstens ein Zertifikat sind.

23. Verfahren nach einem der Ansprüche 19 bis 22, wobei ein Signaturvorgang durch Senden einer initialisierenden Signalisierungsnachricht (Request_Message) durch die mobile Station initiiert wird und die Beendigung der Initiierungsphase mit einer das Ergebnis tragenden Signalisierungsnachricht (RequestSignProcess) der mobilen Station mitgeteilt wird und wobei bei erfolgreicher Durchführung des Signaturvorgangs ein Zahlungsvorgang der zusätzlichen Einrichtung durch Senden einer Nachricht (ResponseSignProcess) initiiert wird und das Ergebnis des durchgeführten Zahlungsvorgangs mittels einer Nachricht (Response) an die mobilen Station geliefert wird.

24. Einrichtung in einer mobilen Station zur Durchführung eines Verfahrens nach Anspruch 19, umfassend
- Mittel zum Speichern des ersten Teils für die Verwaltung von privaten Daten eines Teilnehmers in der mobilen Station,
- Mittel zum Senden von Daten,
- Mittel zum Initiieren einer elektronischen Transaktion in einer mobilen Station,
- Mittel zum Regeln einer elektronischen Transaktion zwischen der mobilen Station und der zusätzlichen Einrichtung und
- Mittel zum Empfangen von Daten.

25. Einrichtung nach Anspruch 24, mit Mitteln zur Durchführung eines Signaturvorgangs umfassend.

26. Einrichtung zwischen einer mobilen Station und einer Netzwerkeinrichtung zum Durchführen eines Verfahrens nach Anspruch 19, umfassend
- Mittel zum Speichern eines zusätzlichen Teils,
- Mittel zum Senden von Daten,
- Mittel für die Verwaltung von öffentlich zugänglichen Daten eines Teilnehmers,
- Mittel zum Regeln der elektronischen Transaktion zwischen der Einrichtung und der Netzwerkeinrichtung und
- Mittel zum Empfangen von Daten.

## Revendications

1. Un système de communication destiné à mettre en oeuvre des transactions électroniques entre une station mobile (MS) dans un réseau de communication mobile (MN) et un équipement réseau (NV) dans un réseau ouvert (ON), comprenant un outil supplémentaire (WV) entre la station mobile et l'équipement réseau, et un protocole (PT) destinée à mettre en oeuvre des transactions électroniques sécurisées étant divisées en une première partie (PT1) destinée à contrôler les données privées d'un abonné et une partie additionnelle (PT2), dans laquelle la première partie (PT1) est installée dans la station mobile (MS) et la partie additionnelle (PT2) dans l'outil additionnel (WV), et dans laquelle une transaction électronique est mise en oeuvre depuis la station mobile via l'outil additionnel vers l'équipement réseau.

2. Un système de communication selon la revendication 1, dans lequel la station mobile (MS) effectue l'administration d'une touche privée d'un abonné mobile.

3. Un système de communication selon la revendication 1 ou 2, dans lequel l'outil additionnel (WV) reprend l'administration de certificats et de touches publiques.

4. Un système de communication selon une des revendications 1 à 3, dans lequel la mise en oeuvre d'un procédé de signature de l'abonné mobile est effectué dans la station mobile.

5. Un système de communication selon une des revendications 1 à 4, dans lequel l'outil additionnel (WV) contrôle l'intégralité des transactions électroniques.

6. Un système de communication selon une des revendications 1, 3 ou 5, dans lequel l'outil additionnel (WV) est installé soit dans un réseau mobile ou dans un noeud de réseau externe.

7. Un système de communication selon une des revendications 1, 2 ou 4, dans lequel la station mobile comprend une fonction d'un ordinateur personnel et une fonction d'un téléphone mobile permettant une communication avec un réseau de communication mobile.

8. Un système de communication selon une des revendications 1 à 7, dans lequel les transactions électroniques sont réalisées par échange de signaux d'informations.

9. Un système de communication selon une des revendications 1 à 8, dans lequel un ordre et une instruction de paiement constituent une partie des transactions électroniques.

10. Un système de communication selon une des revendications 8 à 9, dans lequel les informations par signal sont transmises par encryption.

11. Un système de communication selon la revendication 10, dans lequel une méthode d'encryption asymétrique et symétrique est utilisée pour encrypter et décrypter les signaux d'informations.

12. Un système de communication selon la revendication 11, dans lequel les touches utilisées dans une méthode d'encryption sont soit identiques ou liées les unes aux autres de sorte qu'un message encrypté avec une touche est ensuite décrypté avec l'autre touche.

13. Un système de communication selon les revendications 10 à 12, dans lequel la touche est soit une touche symétrique ou une touche privée et publique.

14. Un système de communication selon une des revendications 4 à 13, dans lequel le procédé de signature est effectué avec la mise en oeuvre d'une authentification basée sur une méthode d'encryption asymétrique.

15. Un système de communication selon une des revendications 4 à 14, dans lequel un message est transmis à partir de l'outil additionnel vers la station mobile pendant le processus de signature, la station mobile signant le message reçu avec la touche privée personnelle et le transmettant au serveur pour informer le serveur de la signature de la station mobile.

16. Un système de communication selon une des revendications 1 à 15, dans lequel les transactions électroniques sont réalisées par utilisation des protocoles de transaction électronique.

17. Un système de communication selon la revendication 16, dans lequel les protocoles de transaction sont Cyber-Flash, First Virtual ou Secure Electronic Transaction™ (SET™).

18. Un système de communication selon la revendication 1, dans lequel le réseau mobile est un réseau de système Global de Communication Mobile (GSM), un General Packet Radio Service (GPRS), un réseau de Universal Mobile Telecommunication (UMTS).

19. Une méthode de mise en oeuvre des transactions électroniques entre une station mobile (MS) dans un réseau de communication mobile (MN) et un équipement réseau (NV) dans un réseau ouvert (ON), et un outil additionnel (WV) entre la station mobile et l'équipement réseau, et un protocole (PT) destiné à mettre en oeuvre des transactions électroniques sécurisées, dans lesquelles ledit protocole est divisé en une première partie (PT1) destinée à contrôler les données privées d'un abonné et une partie additionnelle (PT2), dans laquelle une transaction à partir de la station mobile (MS) vers un outil additionnel (WV) est contrôlée par la première partie (PT1) et dans laquelle la transaction vers l'équipement réseau (NV) dans le réseau ouvert (ON) est contrôlée par la seconde partie (PT2), qui est incluse dans l'outil additionnel (WV).

20. Une méthode selon la revendication 19, dans laquelle les données privées sont une touche privée d'un abonné.

21. Une méthode selon la revendication 19, dans laquelle la seconde partie du logiciel comprend des données publiques de l'abonné.

22. Une méthode selon la revendication 21, dans laquelle les données publiques sont une touche publique d'un abonné et au moins un certificat.

23. Une méthode selon une des revendications 19 à 22, dans laquelle un processus de signature est initié par l'outil mobile par transmission d'un message (Request_Message) et l'arrêt de la phase initiale est envoyé vers l'outil mobile avec un message (RequestSignProcess) transportant le résultat, et dans laquelle après la mise en oeuvre réussie du processus de signature un processus de paiement de l'outil additionnel est mis en oeuvre par transmission d'un message (MessageSignProcess) et le résultat du procédé de paiement mis en oeuvre est envoyé à l'outil mobile au moyen d'un message (Response).

24. Equipement dans une station mobile destiné à mettre en oeuvre une méthode selon la revendication 19, comprenant
- un moyen de stockage de la première partie de l'administration de données privées d'un abonné dans la station mobile,
- un moyen destiné à la transmission des données,
- un moyen destiné à initier une transaction électronique dans une station mobile,
- des moyens destinés au contrôle d'une transaction électronique entre la station mobile et l'outil additionnel, et
- un moyen de réception des données.

25. Equipement selon la revendication 24, comprenant un moyen destiné à mettre en oeuvre un processus de signature.

26. Equipement entre une station mobile et un équipement réseau destiné à mettre en oeuvre une méthode selon la revendication 19, comprenant
- un moyen destiné au stockage d'une partie additionnelle,
- un moyen destiné à la transmission des données,
- un moyen destiné à l'administration des données d'un abonné accessible au public,
- un moyen destiné au contrôle de la transaction électronique entre l'équipement et l'équipement réseau, et
- un moyen de réception des données.
